(19) Europäisches Patentamt
European Patent Office
Office européen des brevets

(11) **EP 4 614 850 A1**

(12) **EUROPEAN PATENT APPLICATION**
published in accordance with Art. 153(4) EPC

(43) Date of publication:
**10.09.2025   Bulletin 2025/37**

(21) Application number: **22965482.7**

(22) Date of filing: **16.11.2022**

(51) International Patent Classification (IPC):
**H04L 1/18** (2023.01)        **H04L 27/00** (2006.01)

(52) Cooperative Patent Classification (CPC):
**H04L 1/18; H04L 27/00**

(86) International application number:
**PCT/CN2022/132307**

(87) International publication number:
**WO 2024/103298 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **QIN, Kangjian
  Shenzhen, Guangdong 518129 (CN)**

• **ZHANG, Huazi
  Shenzhen, Guangdong 518129 (CN)**
• **TONG, Jiajie
  Shenzhen, Guangdong 518129 (CN)**
• **WANG, Xianbin
  Shenzhen, Guangdong 518129 (CN)**
• **WANG, Jun
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA TRANSMISSION METHOD AND APPARATUS**

(57)    This application provides a data transmission method and an apparatus, to improve data decoding accuracy. The method includes: A first device determines, based on a quantity of first pilot signals, a bit rate of a polar code, and a first reliability sequence, a second reliability sequence corresponding to to-be-transmitted data. The first device sends a first codeword sequence and the first pilot signal to a second device, where the first codeword sequence is obtained by performing polar encoding on a bit sequence determined based on the to-be-transmitted data and the second reliability sequence. The second device receives a target codeword sequence and the first pilot signal, and determines a second codeword sequence corresponding to estimation values of the first M bits in the bit sequence and a third codeword sequence corresponding to estimation values of the last $N - M$ bits in the bit sequence. The second device determines the bit sequence based on a first channel estimation value that is determined based on the first pilot signal and a second pilot signal, and the target codeword sequence, where the second pilot signal is determined based on the second codeword sequence and the third codeword sequence.

FIG. 7

**Description**

**TECHNICAL FIELD**

This application relates to the communication field, and more specifically, to a data transmission method and an apparatus.

**BACKGROUND**

When a transmit end transmits data to a receive end, the transmit end performs polar (polar) encoding on a bit sequence corresponding to to-be-encoded data, to obtain a polar encoded codeword sequence C, and C is modulated by a modulator to obtain a modulated symbol sequence X. The modulator at the transmit end performs a pilot signal insertion operation on X, to obtain a time domain sequence S in which a pilot signal and data are mixed, and sends the time domain sequence S to a channel after serial-to-parallel conversion and parallel-to-serial conversion are performed on the time domain sequence S.

The receive end receives a frequency domain sequence Y from a channel, and performs serial-to-parallel conversion and parallel-to-serial conversion on Y that is received to obtain a time domain sequence r. A detector (detector) at the receive end extracts a pilot signal $r_{pilots}$ and a data signal $r_{data}$ from the time domain sequence r, and performs channel estimation based on the pilot signal $r_{pilots}$, to obtain a channel estimation value $\hat{H}$ of a current channel H. The detector obtains, based on the channel estimation value $\hat{H}$ and the data signal $r_{data}$, a log likelihood ratio (log likelihood ratio, LLR) sequence $LLR_{data}$ input to a decoder, and the decoder performs decoding based on $LLR_{data}$, to obtain an estimation sequence $\hat{u}$ of sent data u.

When pilot resources are limited, pilot signals sent by a transmit end are also limited, a receive end performs channel estimation by using only a small quantity of pilot signals, and precision of an obtained channel estimation value is low. Consequently, data decoding accuracy is low, and data decoding performance is poor.

**SUMMARY**

This application provides a data transmission method and an apparatus, to improve data decoding accuracy.

According to a first aspect, a data transmission method is provided. The method may be performed by a chip or a chip system on a terminal device side or a network device side. The method includes: A first device determines, based on a quantity of first pilot signals, a bit rate of a polar code, and a first reliability sequence that correspond to to-be-transmitted data, a second reliability sequence corresponding to the to-be-transmitted data. The first device sends a first codeword sequence and the first pilot signal to a second device, where the first codeword sequence is obtained by performing polar encoding on a bit sequence by the first device, and the bit sequence is determined by the first device based on the to-be-transmitted data and the second reliability sequence.

Based on the foregoing technical solution, the first device determines, based on the quantity of first pilot signals, the bit rate of the polar code, and the first reliability sequence that correspond to the to-be-transmitted data, the second reliability sequence corresponding to the to-be-transmitted data, and determines, based on the second reliability sequence, the bit sequence corresponding to the to-be-transmitted data. Compared with the first reliability sequence, in the bit sequence determined by the first device based on the second reliability sequence, a quantity of information bits corresponding to a V code is reduced, and a quantity of information bits corresponding to a U code is increased, so that a bit rate corresponding to the V code can be reduced, and decoding accuracy of a bit sequence corresponding to the V code can be improved.

With reference to the first aspect, in some implementations of the first aspect, that the first device determines, based on the quantity of first pilot signals, the bit rate of the polar code, and the first reliability sequence that correspond to the to-be-transmitted data, the second reliability sequence corresponding to the to-be-transmitted data includes: The first device determines, based on the quantity of first pilot signals, the bit rate of the polar code, and the first reliability sequence, a bit rate allocation function corresponding to the bit rate of the polar code. The first device determines the second reliability sequence based on the bit rate allocation function corresponding to the bit rate of the polar code.

According to a second aspect, a data transmission method is provided. The method may be performed by a chip or a chip system on a terminal device side or a network device side. The method includes: A second device receives a target codeword sequence and a first pilot signal that are from a first device, where the target codeword sequence is a codeword sequence obtained by performing modulation and channel noise processing on a first codeword sequence, and the first codeword sequence is obtained by performing polar encoding on a bit sequence by the first device. The second device determines a second codeword sequence based on the target codeword sequence and the first pilot signal, where the second codeword sequence is a polar code sequence corresponding to estimation values of the first $M$ bits in the bit sequence, the bit sequence occupies $N$ bits, $M$ is equal to a rounded-up value of $N / 2$, and $N$ and $M$ are positive integers.

The second device determines a third codeword sequence based on the target codeword sequence and the second codeword sequence, where the third codeword sequence is a polar code sequence corresponding to estimation values of the last $N - M$ bits in the bit sequence. The second device determines the bit sequence based on a first channel estimation value and the target codeword sequence, where the first channel estimation value is determined based on the first pilot signal and a second pilot signal, and the second pilot signal is determined based on the second codeword sequence and the third codeword sequence.

Based on the foregoing technical solution, after receiving the target codeword sequence and the first pilot signal that are from the first device, the second device first determines, based on the target codeword sequence and the first pilot signal, a V code sequence (the second codeword sequence) corresponding to the bit sequence. Because the V code corresponds to a low bit rate, accuracy of the V code sequence determined by the second device is high. After demasking the V code sequence from the target codeword sequence, the second device determines a U code sequence (the third codeword sequence) corresponding to the bit sequence, and determines an additional pilot signal (the second pilot signal) based on the V code sequence and the U code sequence. The second device may determine, based on the determined additional pilot signal and the received first pilot signal, the first channel estimation value of a channel between the first device and the second device. Precision of the first channel estimation value is higher than precision of an original channel estimation value determined by using only the first pilot signal. The second device performs decoding on the target codeword sequence based on the first channel estimation value after performing aliasing and noise reduction on the target codeword sequence, so that decoding performance can be improved. Therefore, in the technical solution provided in this embodiment of this application, precision of a determined channel estimation value may be improved by using a determined additional pilot signal, so that data decoding accuracy can be improved.

With reference to the second aspect, in some implementations of the second aspect, that the second device determines the third codeword sequence based on the target codeword sequence and the second codeword sequence includes: The second device demasks the second codeword sequence from the target codeword sequence, to obtain a first intermediate codeword sequence. The second device determines the third codeword sequence based on the first intermediate codeword sequence.

With reference to the second aspect, in some implementations of the second aspect, that the second device determines the bit sequence based on the first channel estimation value and the target codeword sequence includes: The second device determines a fourth codeword sequence based on the first channel estimation value and the target codeword sequence, where the fourth codeword sequence is a polar code sequence corresponding to estimation values of the first $L$ bits in the last $N - M$ bits in the bit sequence, $L$ is equal to a rounded-up value of $(N - M) / 2$, and $L$ is a positive integer. The second device determines a fifth codeword sequence based on the first intermediate codeword sequence and the fourth codeword sequence, where the fifth codeword sequence is a polar code sequence corresponding to estimation values of the last $N - M - L$ bits in the last $N - M$ bits in the bit sequence. The second device determines the bit sequence based on a second channel estimation value and the target codeword sequence, where the second channel estimation value is determined based on the first pilot signal, the second pilot signal, and a third pilot signal, and the third pilot signal is determined based on the fourth codeword sequence and the fifth codeword sequence.

Based on the foregoing solution, after receiving the target codeword sequence and the first pilot signal that are from the first device, the second device first determines, based on the target codeword sequence and the first pilot signal, the V code sequence (the second codeword sequence) corresponding to the bit sequence. Because the V code corresponds to a low bit rate, accuracy of the V code sequence determined by the second device is high. After demasking the V code sequence from the target codeword sequence to obtain the first intermediate codeword sequence, the second device determines, based on the first intermediate codeword sequence, the U code sequence (the third codeword sequence) corresponding to the bit sequence, and determines the second pilot signal based on the V code sequence and the U code sequence. The second device may determine, based on the determined second pilot signal and the received first pilot signal, the first channel estimation value of a channel between the first device and the second device. The precision of the first channel estimation value is higher than the precision of the original channel estimation value determined by using only the first pilot signal. The second device determines, based on the first channel estimation value and the target codeword sequence, the polar code sequence (the fourth codeword sequence) corresponding to the estimation values of the first $L$ bits in the last $N - M$ bits in the bit sequence. The second device demasks the fourth codeword sequence from the first intermediate codeword sequence, to obtain the polar code sequence (the fifth codeword sequence) corresponding to the last $N - M - L$ bits in the last $N - M$ bits in the bit sequence, and determines the third pilot signal based on the fourth codeword sequence and the fifth codeword sequence. The second device may determine, based on the first pilot signal, the second pilot signal, and the third pilot signal, the second channel estimation value of a channel between the first device and the second device. Precision of the second channel estimation value is higher than the precision of the first channel estimation value. The second device performs decoding on the target codeword sequence based on the second channel estimation value after performing aliasing and noise reduction on the target codeword sequence, so that data decoding performance can be improved. Therefore, in the technical solution provided in this embodiment of this application, precision of a channel estimation value may be improved by using additional pilot signals determined for a plurality of times, so that data decoding accuracy can be improved.

With reference to the second aspect, in some implementations of the second aspect, that the second device determines the fifth codeword sequence based on the first intermediate codeword sequence and the fourth codeword sequence includes: The second device demasks the fourth codeword sequence from the first intermediate codeword sequence, to obtain a second intermediate codeword sequence. The second device determines the fifth codeword sequence based on the second intermediate codeword sequence.

According to a third aspect, a communication apparatus is provided. The apparatus may be used in the first device in the first aspect. The apparatus includes: a processing unit, configured to determine, based on a quantity of first pilot signals, a bit rate of a polar code, and a first reliability sequence that correspond to to-be-transmitted data, a second reliability sequence corresponding to the to-be-transmitted data; and a transceiver unit, configured to send a first codeword sequence and the first pilot signal to a second device, where the first codeword sequence is obtained by performing polar encoding on a bit sequence by the processing unit, and the bit sequence is determined by the processing unit based on the to-be-transmitted data and the second reliability sequence.

With reference to the third aspect, in some implementations of the third aspect, the processing unit is specifically configured to determine, based on the quantity of first pilot signals, the bit rate of the polar code, and the first reliability sequence, a bit rate allocation function corresponding to the bit rate of the polar code. The first device determines the second reliability sequence based on the bit rate allocation function corresponding to the bit rate of the polar code.

According to a fourth aspect, a communication apparatus is provided. The apparatus may be used in the second device in the second aspect. The apparatus includes: a transceiver unit, configured to receive a target codeword sequence and a first pilot signal that are from a first device, where the target codeword sequence is a codeword sequence obtained by performing modulation and channel noise processing on a first codeword sequence, and the first codeword sequence is obtained by performing polar encoding on a bit sequence by the first device; and a processing unit, configured to determine a second codeword sequence based on the target codeword sequence and the first pilot signal, where the second codeword sequence is a polar code sequence corresponding to estimation values of the first $M$ bits in the bit sequence, the bit sequence occupies $N$ bits, $M$ is equal to a rounded-up value of $N / 2$, and $N$ and $M$ are positive integers, where the processing unit is further configured to determine a third codeword sequence based on the target codeword sequence and the second codeword sequence, where the third codeword sequence is a polar code sequence corresponding to estimation values of the last $N - M$ bits in the bit sequence; and the processing unit is further configured to determine the bit sequence based on a first channel estimation value and the target codeword sequence, where the first channel estimation value is determined based on the first pilot signal and a second pilot signal, and the second pilot signal is determined based on the second codeword sequence and the third codeword sequence.

With reference to the fourth aspect, in some implementations of the fourth aspect, the processing unit is specifically configured to: demask the second codeword sequence from the target codeword sequence, to obtain a first intermediate codeword sequence; and determine the third codeword sequence based on the first intermediate codeword sequence.

With reference to the fourth aspect, in some implementations of the fourth aspect, the processing unit is specifically configured to: determine a fourth codeword sequence based on the first channel estimation value and the target codeword sequence, where the fourth codeword sequence is a polar code sequence corresponding to estimation values of the first $L$ bits in the last $N-M$ bits in the bit sequence, $L$ is equal to a rounded-up value of $(N - M) / 2$, and $L$ is a positive integer; determine a fifth codeword sequence based on the first intermediate codeword sequence and the fourth codeword sequence, where the fifth codeword sequence is a polar code sequence corresponding to estimation values of the last $N - M - L$ bits in the last $N-M$ bits in the bit sequence; and determine the bit sequence based on a second channel estimation value and the target codeword sequence, where the second channel estimation value is determined based on the first pilot signal, the second pilot signal, and a third pilot signal, and the third pilot signal is determined based on the fourth codeword sequence and the fifth codeword sequence.

With reference to the fourth aspect, in some implementations of the fourth aspect, the processing unit is specifically configured to: demask the fourth codeword sequence from the first intermediate codeword sequence, to obtain a second intermediate codeword sequence; and determine the fifth codeword sequence based on the second intermediate codeword sequence.

According to a fifth aspect, a communication apparatus is provided, and includes a processor and a memory. The memory is configured to store a computer program, and the processor is configured to execute the computer program stored in the memory, to enable the communication apparatus to perform the method according to the first aspect or any one of the possible implementations of the first aspect.

According to a sixth aspect, a communication apparatus is provided, and includes a processor and a memory. The memory is configured to store a computer program, and the processor is configured to execute the computer program stored in the memory, to enable the communication apparatus to perform the method according to the second aspect or any one of the possible implementations of the second aspect.

According to a seventh aspect, a computer-readable storage medium is provided. The computer-readable medium stores a computer program. When the computer program is run on a processor or a computer, the computer or the processor is enabled to perform the method according to the first aspect or any one of the implementations of the first aspect.

According to an eighth aspect, a computer-readable storage medium is provided. The computer-readable medium stores a computer program. When the computer program is run on a processor or a computer, the computer or the processor is enabled to perform the method according to the second aspect or any one of the implementations of the second aspect.

According to a ninth aspect, a computer program product is provided. When the computer program product runs on a computer, the computer is enabled to perform the method according to the first aspect or any one of the implementations of the first aspect.

According to a tenth aspect, a computer program product is provided. When the computer program product runs on a computer, the computer is enabled to perform the method according to the second aspect or any one of the implementations of the second aspect.

The solutions provided in the third aspect to the tenth aspect are used to implement or cooperate to implement the method provided in the first aspect and the second aspect, and therefore can achieve same or corresponding beneficial effects as those in the first aspect and the tenth aspect. Details are not described herein.

**BRIEF DESCRIPTION OF DRAWINGS**

FIG. 1 is a diagram of a network architecture to which an embodiment of this application is applicable;
FIG. 2 is a diagram of a polar encoding matrix;
FIG. 3 is a diagram of a fence graph of polar encoding whose mother code length $N=8$ and K=4;
FIG. 4 is a diagram of a transmit link of a transmit end;
FIG. 5 is a diagram of a receive link of a receive end;
FIG. 6 is a schematic flowchart of a data transmission process of a communication system;
FIG. 7 is a schematic interaction flowchart of a data transmission method according to an embodiment of this application;

FIG. 8 is a diagram of determining, based on $\lambda$, a quantity $K_1^{'}$ of information bits corresponding to a V code of a polar code with a mother code length and a quantity $K_2^{'}$ of information bits corresponding to a U code of the polar code with the mother code length;

FIG. 9 is a diagram of determining, based on $\lambda$, a quantity $K_1^{'}$ of information bits corresponding to a V code of a polar code with a non-mother code length and a quantity $K_2^{'}$ of information bits corresponding to a U code of the polar code with the non-mother code length;
FIG. 10 is a diagram of a polar encoding matrix when $N$=256 and K=64 ;
FIG. 11 is a diagram of an encoding matrix used in a process of performing polar encoding on a bit sequence;
FIG. 12 is a block diagram of a communication apparatus according to an embodiment of this application;
FIG. 13 is a block diagram of another communication apparatus according to an embodiment of this application; and
FIG. 14 is a block diagram of another communication apparatus according to an embodiment of this application.

**DESCRIPTION OF EMBODIMENTS**

The following describes the technical solutions of this application with reference to the accompanying drawings.
Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA 2000) system, a time division-synchronous code division multiple access (time division-synchronous code division multiple access, TD-SCDMA) system, a long term evolution (long term evolution, LTE) system, satellite communication, a sidelink (sidelink, SL), a fourth generation (fourth generation, 4G) system, a fifth generation (5th generation, 5G) system, or a new communication system emerging in the future. A communication system includes communication devices, and the communication devices may perform wireless communication by using an air interface resource. The communication devices may include a network device and a terminal device, and the network device may also be referred to as a base station device. The air interface resource may include at least one of a time domain resource, a frequency domain resource, a code resource, and a spatial resource.

The terminal device in embodiments of this application may include various handheld devices, vehicle-mounted devices, wearable devices, or computing devices that have a wireless communication function, or other processing devices connected to a wireless modem. The terminal may be a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modulator demodulator, modem), a laptop computer (laptop computer), a machine type communication (machine type communication, MTC) terminal, a wireless terminal in self-driving (self-driving), or the like. The user equipment includes vehicle user equipment. With emergence of an internet of things (internet of things, IoT) technology, a growing quantity of devices that previously do not have a communication function, for example, but not limited to, a household appliance, a transportation vehicle, a tool device, a service device, and a service facility, start to obtain a wireless communication function by being configured with a wireless communication unit, to access a wireless communication network and accept remote control. This type of device has a wireless communication function because the device is configured with a wireless communication unit. Therefore, this type of device also belongs to a scope of wireless communication devices. In addition, the terminal device may also be referred to as a mobile station (mobile station, MS), a mobile device, a mobile terminal, a wireless terminal, a handheld device (handset), a client, a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of a terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus for implementing the function of the terminal device is a terminal device and the terminal device is UE is used to describe the technical solutions provided in embodiments of this application.

For example, the network device may be an access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), a baseband unit (baseband unit, BBU), a device that bears a base station function in device-to-device (device-to-device, D2D), an access point (access point, AP) in a wireless fidelity (wireless fidelity, Wi-Fi) system, a radio relay node, a wireless backhaul node, a transmission point (transmission point, TP), a transmission and reception point (transmission and reception point, TRP), or the like; or may be a gNB or a transmission point (for example, a TRP or a TP) in new radio (new radio, NR), or one antenna panel or a group of antenna panels (including a plurality of antenna panels) of a base station in NR; or may be a network node that forms a gNB or a transmission point, for example, a baseband unit (building baseband unit, BBU) or a distributed unit (distributed unit, DU). Alternatively, the network device may be a vehicle-mounted device, a wearable device, a network device in a 6G network, a network device in a future evolved PLMN network, or a network device deployed on a satellite. This is not limited. In addition, based on a size of a provided service coverage area, base stations (base stations, BSs) may be classified into a macro base station configured to provide a macro cell (macro cell), a micro base station configured to provide a micro cell (pico cell), a femto base station configured to provide a femto cell (femto cell), a relay station, an access point, and the like. With evolution of a wireless communication technology, a future base station may also use another name.

The network device has abundant product forms. For example, in a product implementation process, the BBU and a radio frequency unit (radio frequency unit, RFU) may be integrated into a same device, and the device is connected to an antenna array through a cable (for example, but not limited to a feeder). The BBU and the RFU may alternatively be disposed separately, are connected by using an optical fiber, and communicate with each other by using, for example, but not limited to, a common public radio interface (common public radio interface, CPRI) protocol. In this case, the RFU is usually referred to as a remote radio unit (remote radio unit, RRU), and is connected to the antenna array through a cable. In addition, the RRU may alternatively be integrated with the antenna array. For example, this structure is for an active antenna unit (active antenna unit, AAU) product in a current market.

In addition, the BBU may be further decomposed into a plurality of parts. For example, the BBU may be further divided into a central unit (central unit, CU) and a distributed unit (distributed unit, DU) based on real-time performance of a processed service. The CU is responsible for processing a non-real-time protocol and service, and the DU is responsible for processing a physical layer protocol and a real-time service. Further, some physical layer functions may be separated from the BBU or the DU and integrated into the AAU.

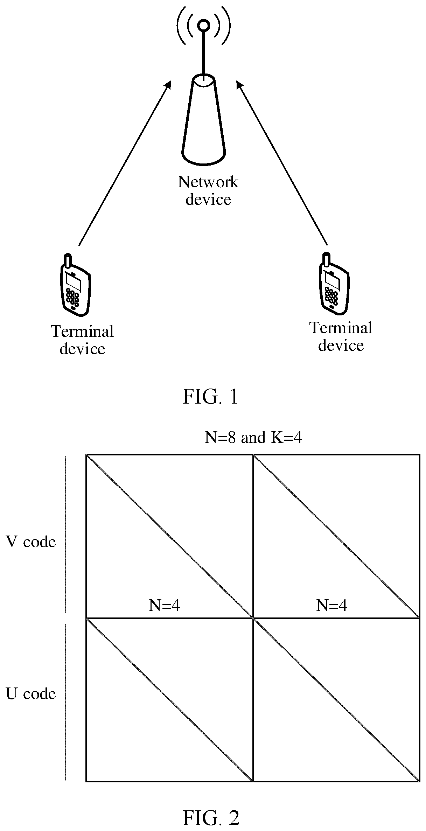

FIG. 1 is a diagram of a network architecture to which an embodiment of this application is applicable. The network architecture includes a network device and a terminal device. The network device may transmit data or control information to the terminal device, or the terminal device may transmit data or control information to the network device. In this embodiment of this application, the network device may be a base station.

For ease of understanding of embodiments of this application, the following briefly describes polar encoding and decoding, and a data processing process in a data transmission process.

1. Polar encoding

A V code of a polar code is a polar encoded codeword sequence corresponding to a first half of a bit sequence corresponding to to-be-transmitted data, and a U code of the polar code is a polar encoded codeword sequence corresponding to a second half of the bit sequence corresponding to the to-be-transmitted data. A mother code length of the polar code is a polar code code length $N=2^n$, and $n$ is a natural number. A non-mother code length of the polar code is any code length $E$ of the polar code that is not equal to a power of 2.

FIG. 2 is a diagram of a polar encoding matrix, where a mother code length $N=8$, and a quantity of information bits in a bit sequence corresponding to to-be-transmitted data is $K=4$. A diagonal added to a square in FIG. 2 represents a lower triangular matrix corresponding to the polar encoding matrix, and the matrix may be obtained by calculating $n$ Kronecker products based on a standard polar kernel $F=\begin{bmatrix} 1 & 0 \\ 1 & 1 \end{bmatrix}$ . For example, when $n=2$, a polar encoding matrix

$$G=F^{\otimes n}=\begin{bmatrix} 1 & 0 & 0 & 0 \\ 1 & 1 & 0 & 0 \\ 1 & 0 & 1 & 0 \\ 1 & 1 & 1 & 1 \end{bmatrix}$$ whose code length is N=4 may be obtained. A square without a diagonal represents an all-zero matrix.

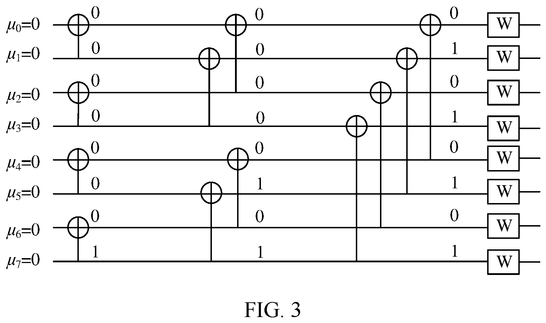

In addition to being represented by using the encoding matrix in FIG. 2, a polar encoding process may be represented based on a "fence graph" in FIG. 3. Encoding results corresponding to the encoding matrix in FIG. 2 and the "fence diagram" in FIG. 3 are completely the same. FIG. 3 is a diagram of a fence graph of polar encoding whose mother code length $N=8$ and $K=4$. In a bit sequence corresponding to to-be-transmitted data, a bit with high reliability is an information bit, a bit with low reliability is a fixed bit, and a value of the fixed bit is usually set to 0. When the bit sequence occupies 8 bits, the 8 bits are respectively represented as $\mu_0$, $\mu_1$, $\mu_2$, $\mu_3$, $\mu_4$, $\mu_5$, $\mu_6$, and $\mu_7$ from left to right. If a reliability sequence obtained through sorting from high reliability to low reliability is [8, 7, 6, 4, 5, 3, 2, 1], and there are four information bits, $\mu_7$, $\mu_6$, $\mu_5$, and $\mu_3$ are information bits, and $\mu_4$, $\mu_2$, $\mu_1$, and $\mu_0$ are fixed bits. In FIG. 3, a V code sequence is a codeword sequence corresponding to the 4 bits $\mu_0$ to $\mu_3$, and a U code sequence is a codeword sequence corresponding to the 4 bits $\mu_4$ to $\mu_7$. It may be found that a bit sequence corresponding to the V code sequence includes only one information bit, and a bit sequence corresponding to the U code sequence includes three information bits. Therefore, a bit rate of the V code is 1/8, a bit rate of the U code is 3/8, and a bit rate of an overall polar code is $K / N =4/8=1/2$.

2. Polar decoding

Polar decoding methods may be classified into two types based on decoding time sequences, including polar-code-based sequential decoding and polar-code-based non-sequential decoding. The polar-code-based sequential decoding means that a decoder performs bit-by-bit decoding based on a natural time sequence designed for the polar code. The polar-code-based non-sequential decoding means that a decoder performs parallel decoding based on another structure, for example, a Tanner graph (Tanner graph) structure or a trellis graph (trelis graph) structure, of the polar code. Currently, main polar-code-based sequential decoding algorithms include successive cancellation (successive cancellation, SC) decoding, successive cancellation list (successive cancellation list, SCL) decoding, successive cancellation stack (successive cancellation stack, SCS) decoding, cyclic redundancy check (cyclic redundancy check, CRC) code aided successive cancellation list (CRC-aided successive cancellation list, CA-SCL) decoding, and the like. Polar-code-based non-sequential decoding algorithms include belief propagation (belief propagation, BP) decoding and the like. In embodiments of this application, decoding may be performed according to the polar-code-based sequential decoding algorithm. For example, in embodiments of this application, decoding may be performed according to an SC decoding algorithm.

3. Data processing process in the data transmission process

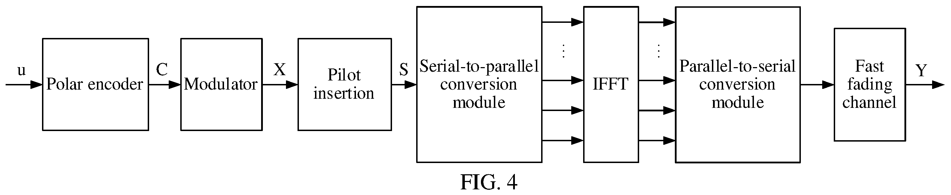

FIG. 4 is a diagram of a transmit link of a transmit end. u is a bit sequence corresponding to to-be-encoded data, u is processed by a polar encoder to obtain a polar encoded codeword sequence C, and then C is modulated by a modulator to obtain a modulated symbol sequence X. The modulator at the transmit end performs a pilot signal insertion operation on the modulated symbol sequence X, to obtain a time domain sequence S in which a pilot signal and data are mixed. After serial-to-parallel conversion is performed on the time domain sequence S by using a serial-to-parallel conversion module, the time domain sequence S is transformed to a frequency domain through an inverse fast Fourier transform (inverse fast Fourier transform, IFFT) operation, and then is sent to a fast fading (fast fading) channel after parallel-to-serial conversion is performed on the time domain sequence S by using a parallel-to-serial conversion module.

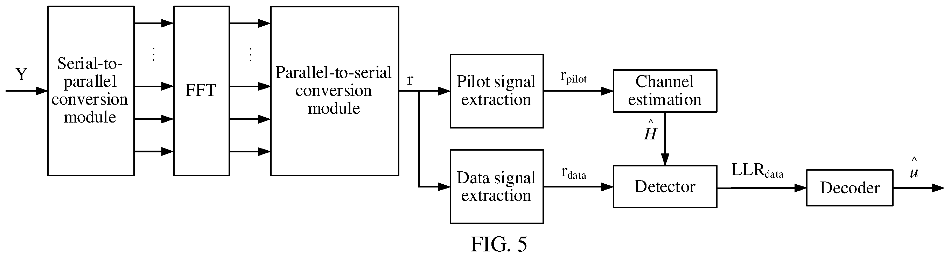

FIG. 5 is a diagram of a receive link of a receive end. The receive end receives a frequency domain sequence Y from a channel, performs serial-to-parallel conversion on the received frequency domain sequence Y by using a serial-to-parallel conversion module, then performs fast Fourier transform (fast Fourier transform, FFT) on the received frequency domain sequence Y, and obtains a time domain sequence r by using a parallel-to-serial conversion module. A detector at the receive end extracts a pilot signal $r_{pilots}$ and a data signal $r_{data}$ from the time domain sequence r, and performs channel estimation based on the pilot signal $r_{pilots}$, to obtain a channel estimation value $\hat{H}$ of a current channel H. The detector obtains, based on the channel estimation value $\hat{H}$ and the data signal $r_{data}$, an LLR sequence $LLR_{data}$ input to a decoder, and the decoder performs decoding based on $LLR_{data}$, to obtain an estimation sequence $\hat{u}$ of sent data u.

When pilot resources are limited, pilot signals sent by a transmit end are also limited, a receive end performs channel estimation by using only a small quantity of pilot signals, and precision of an obtained channel estimation value is low. Consequently, data decoding accuracy is low, and data decoding performance is poor.

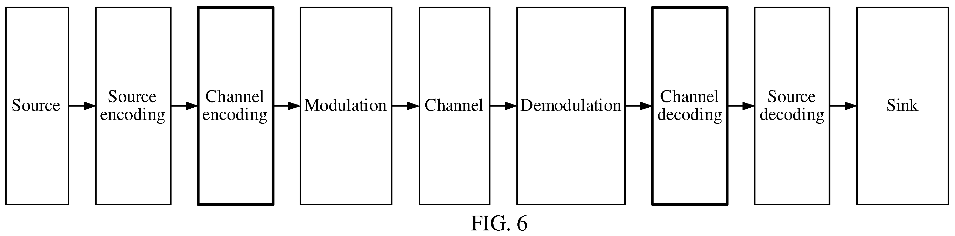

FIG. 6 is a schematic flowchart of a data transmission process of a communication system. A core network element in this embodiment of this application is a channel encoding unit and a channel decoding unit. The channel encoding unit at a transmit end is located between a source encoding unit and a modulation unit. The channel encoding unit is responsible for performing channel encoding on a bit generated by a source. After modulation, a modulated symbol is sent to a receive end through a noisy channel for demodulation, and then channel decoding is performed. The channel decoding unit is located between a demodulation unit and a source decoding unit. The channel decoding unit is responsible for restoring a source bit stream.

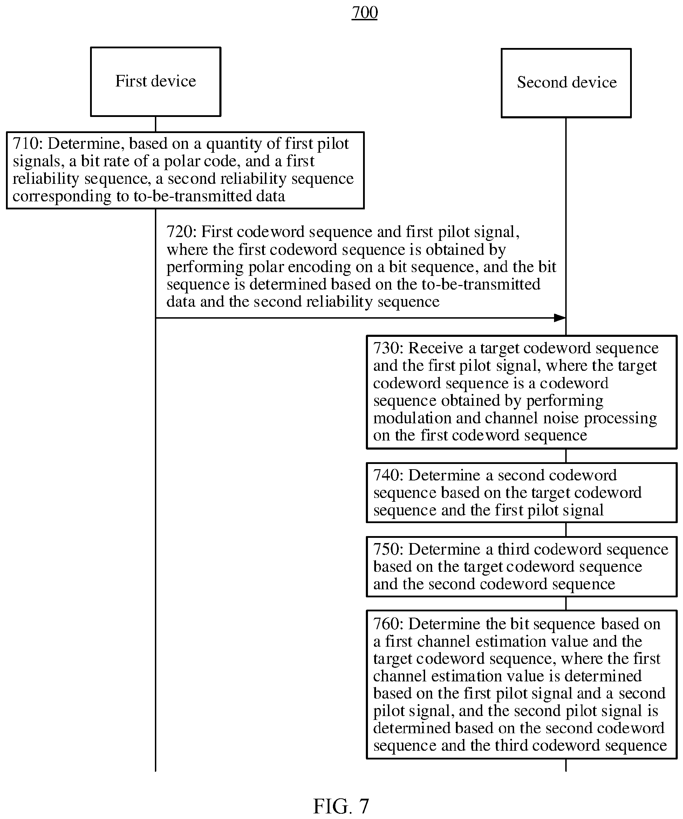

Embodiments of this application provide a data transmission method, to improve data decoding accuracy and improve data decoding performance. FIG. 7 is a schematic interaction flowchart of a data transmission method according to an embodiment of this application. In this embodiment of this application, a first device may be a network device, and a second device may be a terminal device. Alternatively, in this embodiment of this application, a first device may be a terminal device, and a second device may be a network device. In this embodiment of this application, a first pilot signal is a pilot signal sent by the first device, and a second pilot signal and a third pilot signal are additional pilot signals determined by the second device.

710: The first device determines, based on a quantity of first pilot signals, a bit rate of a polar code, and a first reliability sequence that correspond to to-be-transmitted data, a second reliability sequence corresponding to the to-be-transmitted data. The first reliability sequence is a reliability sequence predefined in an NR standard, and the first reliability sequence is related to a quantity of bits corresponding to the to-be-transmitted data and a quantity of information bits corresponding to the to-be-transmitted data.

Compared with the first reliability sequence, based on the second reliability sequence, a quantity of information bits corresponding to a V code in a bit sequence corresponding to the to-be-transmitted data may be reduced, and a quantity of information bits corresponding to a U code in the bit sequence corresponding to the to-be-transmitted data may be increased, so that a bit rate corresponding to the V code can be reduced, and decoding accuracy of a bit sequence corresponding to the V code can be improved.

For example, the first device determines a channel capacity improvement proportion $\lambda$ based on the quantity of first pilot signals and the bit rate of the polar code that correspond to the to-be-transmitted data. The first device determines, based on the first reliability sequence corresponding to the to-be-transmitted data, a quantity $K_1$ of information bits corresponding to an original V code corresponding to the to-be-transmitted data and a quantity $K_2$ of information bits corresponding to an original U code corresponding to the to-be-transmitted data. The first device determines, based on the channel capacity improvement proportion $\lambda$, $K_1$, and $K_2$, the quantity $K_1^{'}$ of information bits corresponding to the V code corresponding to the bit sequence and the quantity $K_2^{'}$ of information bits corresponding to the U code corresponding to the bit sequence. Then the first device determines, based on $K_1^{'}$ and $K_2^{'}$, the second reliability sequence corresponding to the to-be-transmitted data. The channel capacity improvement proportion $\lambda$ is related to a quantity P of first pilot signals and a bit rate R that are currently used by the first device. R = K / N, where N is a quantity of bits in the bit sequence corresponding to the to-be-transmitted data, N is a positive integer, K is a quantity of information bits in the bit sequence corresponding to the to-be-transmitted data, and $K = K_1^{'} + K_2^{'}$.

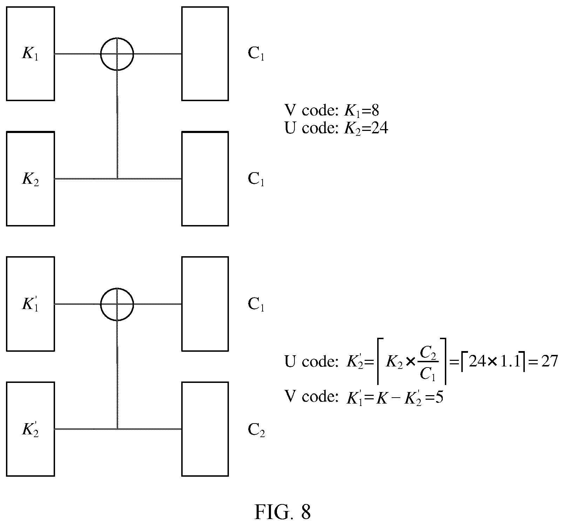

FIG. 8 is a diagram of determining, based on $\lambda$, a quantity $K_1^{'}$ of information bits corresponding to a V code of a polar code with a mother code length and a quantity $K_2^{'}$ of information bits corresponding to a U code of the polar code with the mother code length. It is assumed that a mother code length of a polar code sequence is $N=2^5=64$, a quantity $K$ of information bits is 32, and a quantity $K_1$ of information bits corresponding to the first $N/2$ polar codes is 8. Therefore, the quantity of information bits corresponding to the V code is $K_1$, and the quantity of information bits corresponding to the U code is $K_2 = K - K_1 = 24$. $K_2$ is corrected based on $\lambda$, to obtain $K_2^{'} = \lceil l K_2 \rceil = 27$ and $K_1^{'} = K - K_2^{'} = K_1 + (1-l) K_2 = 5$.

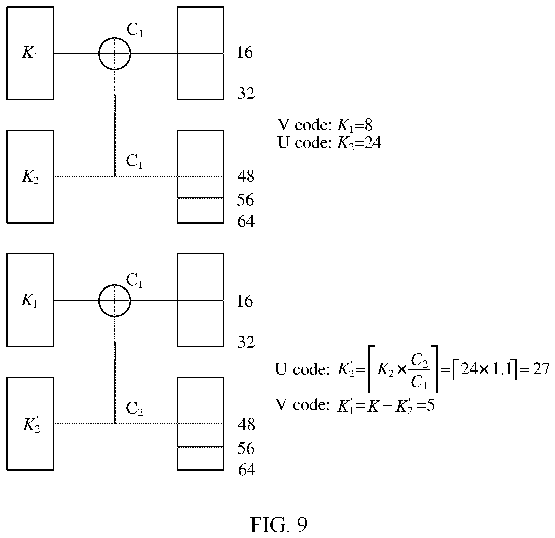

FIG. 9 is a diagram of determining, based on $\lambda$, a quantity $K_1^{'}$ of information bits corresponding to a V code of a polar code with a non-mother code length and a quantity $K_2^{'}$ of information bits corresponding to a U code of the polar code with the non-mother code length. It is assumed that a non-mother code length $E$ of a polar code sequence is 59, and a quantity K of information bits is 32. First, it is determined that a mother code length of the polar code sequence is $N=2 \wedge \lceil (\log_2(E)) \rceil$. A quantity of information bits corresponding to the first $\lceil N/2 \rceil$ polar codes is $K_1$, and a quantity of information bits corresponding to a U code is $K_2 = K - K_1$. $K_2$ is corrected based on $\lambda$, to obtain $K_2^{'} = \lceil l K_2 \rceil$ and $K_1^{'} = K - K_2^{'} = K_1 + (1-l) K_2$.

For example, the capacity improvement proportion $\lambda(R, P)$ may be expressed in a form of a polynomial or a piecewise function. The capacity improvement proportion $\lambda(R, P)$ may be expressed in a form of a polynomial in the following formula (1):

$$\lambda(R, P) = p00 + p10*P + p01*R + p20*P^\wedge2 + p11*P*R + p02*R^\wedge2$$
$$+ p30*P^\wedge3 + p21*P^\wedge2*R + p12*P*R^\wedge2 \qquad (1)$$

Coefficients in the polynomial of the formula (1) may be obtained from Table 1.

Table 1

| Coefficients in the polynomial $\lambda(R, P)$ (where values within a bound of a 95% confidence interval can be considered, with a power combination of 2 preferred) | | |
|---|---|---|
| Coefficient | Optimized value | Lower bound of the 95% confidence interval | Upper bound of the 95% confidence interval |
| $p00$ | 0.9654 | 0.787 | 1.144 |
| $p10$ | 0.2341 | 0.1435 | 0.3247 |
| $p01$ | -0.3131 | -0.9987 | 0.3725 |
| $p20$ | -0.04024 | -0.05954 | -0.02095 |
| $p11$ | -0.177 | -0.3533 | -0.0008006 |
| $p02$ | 0.304 | -0.3583 | 0.9663 |
| $p30$ | 0.002349 | 0.0009607 | 0.003736 |
| $p21$ | 0.00883 | -0.001728 | 0.01939 |
| $p12$ | 0.07698 | -0.06895 | 0.2229 |

For example, the capacity improvement proportion $\lambda(R, P)$ may be obtained by looking up a table. Based on a quantity $P$ of pilot signals and a modulation and coding scheme (modulation and coding scheme, MCS) index (index), $\lambda(R, P)$ may be determined by using Table 2. The MCS index is in one-to-one correspondence with a bit rate $R$.

Table 2

| P MCS index | 1 | 2 | 3 | ... | 5 | ... | 8 | ... | 64 |
|---|---|---|---|---|---|---|---|---|---|
| 0 | 1.047 | 1.1895 | 1.2062 | ... | 1.2172 | ... | 1.2314 | ... | Reserved |
| 1 | 1.047 | 1.1895 | 1.2062 | ... | 1.2172 | ... | 1.2314 | ... | Reserved |
| 2 | 1.047 | 1.1895 | 1.2062 | ... | 1.2172 | ... | 1.2314 | ... | Reserved |
| 3 | 1.047 | 1.1895 | 1.2062 | ... | 1.2172 | ... | 1.2314 | ... | Reserved |

| P / MCS index | 1 | 2 | 3 | ... | 5 | ... | 8 | ... | 64 |
|---|---|---|---|---|---|---|---|---|---|
| 4 | 1.047 | 1.1895 | 1.2062 | ... | 1.2172 | ... | 1.2314 | ... | Reserved |
| 5 | 1.047 | 1.1895 | 1.2062 | ... | 1.2172 | ... | 1.2314 | ... | Reserved |
| 6 | 1.047 | 1.1895 | 1.2062 | ... | 1.2172 | ... | 1.2314 | ... | Reserved |
| 7 | 1.0234 | 1.0948 | 1.1031 | ... | 1.1085 | ... | 1.1158 | ... | Reserved |
| 8 | 1.0234 | 1.0948 | 1.1031 | ... | 1.1085 | ... | 1.1158 | ... | Reserved |
| 9 | 1.0234 | 1.0948 | 1.1031 | ... | 1.1085 | ... | 1.1158 | ... | Reserved |
| 10 | 1.0234 | 1.0948 | 1.1031 | ... | 1.1085 | ... | 1.1158 | ... | Reserved |
| 11 | 1.0234 | 1.0948 | 1.1031 | ... | 1.1085 | ... | 1.1158 | ... | Reserved |
| 12 | 1.0151 | 1.0757 | 1.0884 | ... | 1.0887 | ... | 1.1048 | ... | Reserved |
| 13 | 1.0151 | 1.0757 | 1.0884 | ... | 1.0887 | ... | 1.1048 | ... | Reserved |
| 14 | 1.0151 | 1.0757 | 1.0884 | ... | 1.0887 | ... | 1.1048 | ... | Reserved |
| 15 | 1.0151 | 1.0757 | 1.0884 | ... | 1.0887 | ... | 1.1048 | ... | Reserved |
| 16 | 1.0151 | 1.0757 | 1.0884 | ... | 1.0887 | ... | 1.1048 | ... | Reserved |
| 17 | 1.0151 | 1.0757 | 1.0884 | ... | 1.0887 | ... | 1.1048 | ... | Reserved |
| 18 | 1.0151 | 1.0757 | 1.0884 | ... | 1.0887 | ... | 1.1048 | ... | Reserved |
| 19 | 1.0151 | 1.0757 | 1.0884 | ... | 1.0887 | ... | 1.1048 | ... | Reserved |
| 20 | 1.0151 | 1.0757 | 1.0884 | ... | 1.0887 | ... | 1.1048 | ... | Reserved |
| 21 | 1.0151 | 1.0757 | 1.0884 | ... | 1.0887 | ... | 1.1048 | ... | Reserved |
| 22 | 1.0151 | 1.0757 | 1.0884 | ... | 1.0887 | ... | 1.1048 | ... | Reserved |
| 23 | 1.0151 | 1.0757 | 1.0884 | ... | 1.0887 | ... | 1.1048 | ... | Reserved |
| 24 | 1.0151 | 1.0757 | 1.0884 | ... | 1.0887 | ... | 1.1048 | ... | Reserved |
| 25 | 1.0151 | 1.0757 | 1.0884 | ... | 1.0887 | ... | 1.1048 | ... | Reserved |
| 26 | 1.0151 | 1.0757 | 1.0884 | ... | 1.0887 | ... | 1.1048 | ... | Reserved |
| 27 | 1.0151 | 1.0757 | 1.0884 | ... | 1.0887 | ... | 1.1048 | ... | Reserved |
| 28 | 1.0151 | 1.0757 | 1.0884 | ... | 1.0887 | ... | 1.1048 | ... | Reserved |
| 29 | 1.0151 | 1.0757 | Reserved | ... | | ... | | ... | Reserved |
| 30 | 1.0151 | 1.0757 | | | | | | | |
| 31 | 1.0151 | 1.0757 | | | | | | | |

Optionally, the first device determines, based on the quantity of first pilot signals, the bit rate of the polar code, and the first reliability sequence that correspond to the to-be-transmitted data, a bit rate allocation function corresponding to the bit rate of the polar code. The first device determines, based on the bit rate allocation function corresponding to the bit rate of the polar code, the second reliability sequence corresponding to the to-be-transmitted data.

For example, the first device determines, based on the first reliability sequence corresponding to the to-be-transmitted data, the quantity $K_1$ of information bits corresponding to the original V code corresponding to the to-be-transmitted data and the quantity $K_2$ of information bits corresponding to the original U code corresponding to the to-be-transmitted data. The first device determines, based on the quantity of first pilot signals, the bit rate of the polar code, and an original bit rate allocation function $R_{seq} = K_1 / K_2$, the bit rate allocation function $R_{update}$ corresponding to the bit rate of the polar code. The first device determines, based on the bit rate allocation function corresponding to the bit rate of the polar code, the quantity $K_1'$ of information bits corresponding to the V code corresponding to the bit sequence and the quantity $K_2'$ of information bits corresponding to the U code corresponding to the bit sequence. Then the first device determines, based on $K_1'$ and $K_2'$, the second reliability sequence corresponding to the to-be-transmitted data. The bit rate allocation function $R_{update}$ corresponding to the bit rate of the polar code may be expressed by using the following formula (2):

$$R_{update} = 1 - \frac{\lambda}{R_{seq} + 1} \qquad\qquad (2)$$

$R_{seq}$ is an original bit rate allocation function of a polar code sequence $R_{seq1}^N$ when the quantity of information bits is K, the original bit rate allocation function is determined based on the first reliability sequence, $K_1' = \lceil R_{update} \times K \rceil$ or $K_1' = \lfloor R_{update} \times K \rfloor$, and $K_2' = K - K_1'$.

720: The first device sends a first codeword sequence and the first pilot signal to the second device, where the first codeword sequence is obtained by performing polar encoding on a bit sequence by the first device, and the bit sequence is determined by the first device based on the to-be-transmitted data and the second reliability sequence. It may be understood that the first device determines the bit sequence based on the to-be-transmitted data and the second reliability sequence, and then the first device performs polar encoding on the bit sequence, to obtain the first codeword sequence. The first pilot signal is used by the second device to perform channel estimation.

730: The second device receives a target codeword sequence and the first pilot signal that are from the first device, where the target codeword sequence is a codeword sequence obtained by performing modulation on the first codeword sequence by the first device and then performing channel noise processing on the first codeword sequence on a channel between the first device and the second device.

740: The second device determines a second codeword sequence based on the target codeword sequence and the first pilot signal, where the second codeword sequence is a polar code sequence corresponding to estimation values of the first M bits in the bit sequence, M is equal to a rounded-up value of N / 2, and M is a positive integer. The second codeword sequence may be understood as a V code sequence corresponding to the bit sequence.

For example, the second device performs channel estimation based on the first pilot signal, to obtain an original channel estimation value of a current channel. The second device obtains, based on the original channel estimation value and the target codeword sequence, a first LLR sequence input to a decoder. The decoder performs polar decoding on the first LLR sequence, to obtain the estimation values of the first M bits in the bit sequence. Polar encoding is performed on the estimation values of the first M bits in the bit sequence, to obtain the second codeword sequence.

750: The second device determines a third codeword sequence based on the target codeword sequence and the second codeword sequence, where the third codeword sequence is a polar code sequence corresponding to estimation values of the last N - M bits in the bit sequence. The second codeword sequence may be understood as a U code sequence corresponding to the bit sequence. The first codeword sequence is a superposition of the second codeword sequence and the third codeword sequence in a binary field.

For example, the second device demasks (demasks) the second codeword sequence from the target codeword sequence, to obtain a first intermediate codeword sequence. The second device determines a third codeword sequence based on the first intermediate codeword sequence.

Specifically, the second device determines whether symbols of bits in a second half of the first intermediate codeword sequence are repetitions of symbols of bits in a first half of the first intermediate codeword sequence. If the symbols of the bits in the second half of the first intermediate codeword sequence are repetitions of the symbols of the bits in the first half of the first intermediate codeword sequence, the second device obtains, based on the original channel estimation value and the first intermediate codeword sequence, a second LLR sequence input to the decoder. The decoder performs polar decoding on the second LLR sequence, to obtain the estimation values of the last $N - M$ bits in the bit sequence. Polar encoding is performed on the estimation values of the last $N-M$ bits in the bit sequence, to obtain the third codeword sequence. If the symbols of the bits in the second half of the first intermediate codeword sequence are not repetitions of the symbols of the bits in the first half of the first intermediate codeword sequence, the second device flips a symbol of a bit with a smaller absolute value of an LLR in bits that have different symbols and that are in the first half and the second half that are of the first intermediate codeword sequence, where flipped symbols of bits in the second half of the first intermediate codeword sequence are repetitions of the symbols of the bits in the first half of the first intermediate codeword sequence. The second device obtains, based on the original channel estimation value and a flipped first intermediate codeword sequence, a second LLR sequence input to the decoder. The decoder performs polar decoding on the second LLR sequence, to obtain the estimation values of the last $N - M$ bits in the bit sequence. Polar encoding is performed on the estimation values of the last $N-M$ bits in the bit sequence, to obtain the third codeword sequence.

For example, the first intermediate codeword sequence is {1.2, -1.5, 3, 0.5}. Because in the first intermediate codeword sequence, a symbol of a 2nd bit is different from a symbol of a 4th bit (symbols of -1.5 and 0.5 are different), and symbols of bits in a second half of the first intermediate codeword sequence are not repetitions of symbols of bits in a first half of the first intermediate codeword sequence, the symbol of the 4th bit with a smaller absolute value of an LLR in the 2nd bit and the 4th bit is flipped, to obtain a flipped first intermediate codeword sequence {1.2, -1.5, 3, -0.5}.

760: The second device determines the bit sequence based on a first channel estimation value and the target codeword sequence, where the first channel estimation value is determined based on the first pilot signal and the second pilot signal, and the second pilot signal is determined based on the second codeword sequence and the third codeword sequence. Specifically, the second device determines the second pilot signal based on the second codeword sequence and the third codeword sequence. The second device determines the first channel estimation value based on the first pilot signal and the second pilot signal. The second device obtains, based on the first channel estimation value and the target codeword sequence, a third LLR sequence input to the decoder. The decoder performs polar decoding on the third LLR sequence, to obtain the bit sequence, so that data sent by the first device can be obtained by using the bit sequence. The second pilot signal is a pilot signal obtained by performing phase modulation on the superposition of the second codeword sequence and the third codeword sequence in the binary field. Precision of the first channel estimation value is higher than precision of the original channel estimation value determined by using only the first pilot signal.

In the technical solution provided in this embodiment of this application, the first device determines, based on the quantity of first pilot signals, the bit rate of the polar code, and the first reliability sequence that correspond to the to-be-transmitted data, the second reliability sequence corresponding to the to-be-transmitted data, and determines, based on the second reliability sequence, the bit sequence corresponding to the to-be-transmitted data. In the determined bit sequence, the quantity of information bits corresponding to the V code is reduced, and the quantity of information bits corresponding to the U code is increased, so that the bit rate corresponding to the V code can be reduced. After receiving the target codeword sequence and the first pilot signal that are from the first device, the second device first determines, based on the target codeword sequence and the first pilot signal, the V code sequence (the second codeword sequence) corresponding to the bit sequence. Because the V code corresponds to a low bit rate, accuracy of the V code sequence determined by the second device is high. After demasking the V code sequence from the target codeword sequence, the second device determines the U code sequence (the third codeword sequence) corresponding to the bit sequence, and determines an additional pilot signal (the second pilot signal) based on the V code sequence and the U code sequence. The second device may determine, based on the determined additional pilot signal and the received first pilot signal, the first channel estimation value of the channel between the first device and the second device. The precision of the first channel estimation value is higher than the precision of the original channel estimation value determined by using only the first pilot signal. The second device performs decoding on the target codeword sequence based on the first channel estimation value after performing aliasing and noise reduction on the target codeword sequence, so that decoding performance can be improved. Therefore, in the technical solution provided in this embodiment of this application, precision of a determined channel estimation value may be improved by using a determined additional pilot signal, so that data decoding accuracy can be improved, and data decoding performance can be improved.

Optionally, the second device determines a fourth codeword sequence based on the first channel estimation value and the target codeword sequence. The fourth codeword sequence is a polar code sequence corresponding to estimation values of the first $L$ bits in the last $N - M$ bits in the bit sequence, $L$ is equal to a rounded-up value of $(N - M) / 2$, and $L$ is a positive integer. The second device determines a fifth codeword sequence based on the first intermediate codeword sequence and the fourth codeword sequence, where the fifth codeword sequence is a polar code sequence corresponding to estimation values of the last $N - M - L$ bits in the last $N - M$ bits in the bit sequence. The second device determines the bit sequence based on a second channel estimation value and the target codeword sequence, where the second channel estimation value is determined based on the first pilot signal, the second pilot signal, and the third pilot signal, and the third pilot signal is determined based on the fourth codeword sequence and the fifth codeword sequence. It should be understood that a larger quantity of pilot signals indicates higher precision of a determined channel estimation value. Because the first channel estimation value is determined based on the first pilot signal and the second pilot signal, and the second channel estimation value is determined based on the first pilot signal, the second pilot signal, and the third pilot signal, precision of the second channel estimation value is higher than the precision of the first channel estimation value.

Optionally, the second device demasks the fourth codeword sequence from the first intermediate codeword sequence, to obtain a second intermediate codeword sequence. The second device determines the fifth codeword sequence based on the second intermediate codeword sequence. The fifth codeword sequence is a polar code sequence corresponding to the last $N - M - L$ bits in the last $N - M$ bits in the bit sequence.

Specifically, the second device obtains, based on the first channel estimation value and the target codeword sequence, a fourth LLR sequence input to the decoder. The decoder performs polar decoding on the fourth LLR sequence, to obtain the estimation values of the first $L$ bits in the last $N-M$ bits in the bit sequence. Polar encoding is performed on the estimation values of the first $L$ bits in the last $N-M$ bits in the bit sequence, to obtain the fourth codeword sequence. The second device demasks the fourth codeword sequence from the first intermediate codeword sequence, to obtain the second intermediate codeword sequence. The second intermediate codeword sequence may be understood as a receiving sequence corresponding to the last $N - M - L$ bits in the last $N-M$ bits in the bit sequence. The second device determines the fifth codeword sequence based on the second intermediate codeword sequence. The second device determines the third pilot signal based on the fourth codeword sequence and the fifth codeword sequence. The second device determines the second channel estimation value based on the first pilot signal, the second pilot signal, and the third pilot signal. The second device obtains, based on the second channel estimation value and the target codeword sequence, a fifth LLR sequence input to the decoder. The decoder performs polar decoding on the fifth LLR sequence, to obtain the bit sequence. The third pilot signal is a pilot signal obtained by performing phase modulation on a superposition of the fourth codeword sequence and the fifth codeword sequence in the binary field.

A process in which the second device determines the fifth codeword sequence based on the second intermediate codeword sequence is similar to the foregoing process in which the second device determines the third codeword sequence based on the first intermediate codeword sequence. Specifically, the second device determines whether symbols of bits in a second half of the second intermediate codeword sequence are repetitions of symbols of bits in a first half of the second intermediate codeword sequence. If the symbols of the bits in the second half of the second intermediate codeword sequence are repetitions of the symbols of the bits in the first half of the second intermediate codeword sequence, the second device obtains, based on the first channel estimation value and the second intermediate codeword sequence, a sixth LLR sequence input to the decoder. The decoder performs polar decoding on the sixth LLR sequence, to obtain the estimation values of the last $N - M - L$ bits in the last $N - M$ bits in the bit sequence. Polar encoding is performed on the estimation values of the last $N - M - L$ bits in the last $N-M$ bits in the bit sequence, to obtain the fifth codeword sequence. If the symbols of the bits in the second half of the second intermediate codeword sequence are not repetitions of the symbols of the bits in the first half of the second intermediate codeword sequence, the second device flips a symbol of a bit with a smaller absolute value of an LLR in bits that have different symbols and that are in the first half and the second half that are of the second intermediate codeword sequence, where flipped symbols of bits in the second half of the second intermediate codeword sequence are repetitions of the symbols of the bits in the first half of the second intermediate codeword sequence. The second device obtains, based on the first channel estimation value and a flipped second intermediate codeword sequence, a sixth LLR sequence input to the decoder. The decoder performs polar decoding on the sixth LLR sequence, to obtain the estimation values of the last $N - M - L$ bits in the last $N - M$ bits in the bit sequence. Polar encoding is performed on the estimation values of the last $N - M - L$ bits in the last $N - M$ bits in the bit sequence, to obtain the fifth codeword sequence.

Based on the foregoing solution, after receiving the target codeword sequence and the first pilot signal that are from the first device, the second device first determines, based on the target codeword sequence and the first pilot signal, the V code sequence (the second codeword sequence) corresponding to the bit sequence. Because the V code corresponds to a low bit rate, accuracy of the V code sequence determined by the second device is high. After demasking the V code sequence from the target codeword sequence to obtain the first intermediate codeword sequence, the second device determines, based on the first intermediate codeword sequence, the U code sequence (the third codeword sequence) corresponding to the bit sequence, and determines the second pilot signal based on the V code sequence and the U code sequence. The second device may determine, based on the determined second pilot signal and the received first pilot signal, the first channel estimation value of the channel between the first device and the second device. The precision of the first channel estimation value is higher than the precision of the original channel estimation value determined by using only the first pilot signal. The second device determines, based on the first channel estimation value and the target codeword sequence, the polar code sequence (the fourth codeword sequence) corresponding to the estimation values of the first $L$ bits in the last $N - M$ bits in the bit sequence. The second device demasks the fourth codeword sequence from the first intermediate codeword sequence, to obtain the polar code sequence (the fifth codeword sequence) corresponding to the last $N - M - L$ bits in the last $N - M$ bits in the bit sequence, and determines the third pilot signal based on the fourth codeword sequence and the fifth codeword sequence. The second device may determine, based on the first pilot signal, the second pilot signal, and the third pilot signal, the second channel estimation value of the channel between the first device and the second device. The precision of the second channel estimation value is higher than the precision of the first channel estimation value. The second device performs decoding on the target codeword sequence based on the second channel estimation value after performing aliasing and noise reduction on the target codeword sequence, so that decoding performance can be improved. Therefore, in the technical solution provided in this embodiment of this application, precision of a channel estimation value may be improved by using additional pilot signals determined for a plurality of times, so that data decoding accuracy can be improved, and data decoding performance can be improved.

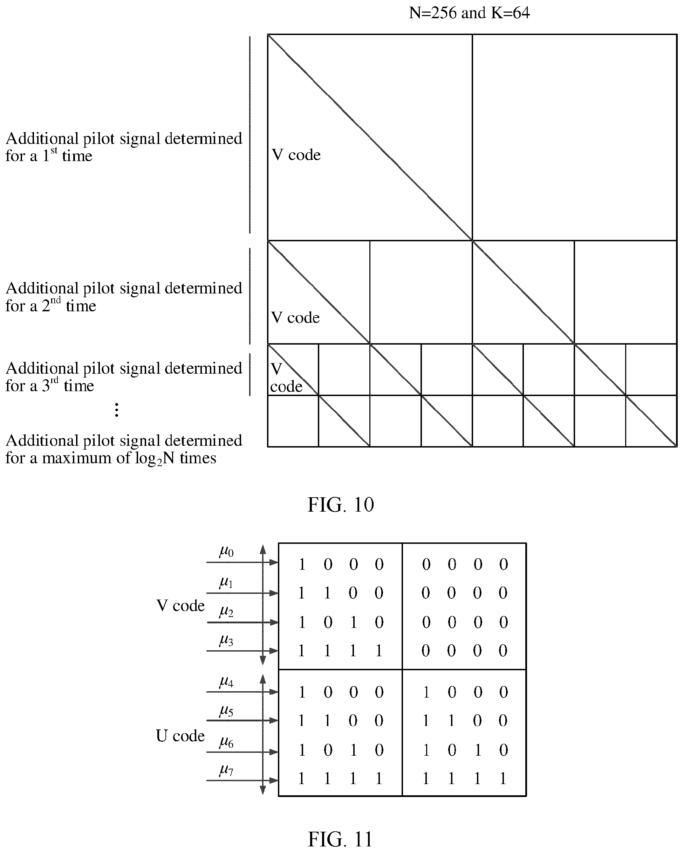

Optionally, in this embodiment of this application, the second device may determine additional pilot signals for three or more times by using a polar-code-based U-UV structure. A larger quantity of determined additional pilot signals indicates higher data decoding accuracy and better data decoding performance. FIG. 10 is a diagram of a polar encoding matrix when N=256 and K=64 . Additional pilot signals may be determined for a maximum of $\log_2(N)$ times based on the encoding matrix.

The following describes a data transmission method provided in embodiments of this application with reference to specific examples.

Example 1: An example in which a quantity of bits in a bit sequence corresponding to to-be-transmitted data is $N=4$, and an additional pilot signal is determined once by using a polar-code-based U-UV structure is used.

Step (1): A first device determines, based on a quantity of first pilot signals, a bit rate of a polar code, and a first reliability sequence that are currently used, a second reliability sequence corresponding to the to-be-transmitted data. The first device determines, based on the to-be-transmitted data and the second reliability sequence, a bit sequence corresponding to the to-be-transmitted data. Then the first device performs polar encoding on the bit sequence, to obtain a first codeword sequence. The first device sends the first codeword sequence and the first pilot signal to a second device. The first reliability sequence is a reliability sequence predefined in an NR standard, and the first reliability sequence is related to a quantity of bits corresponding to the to-be-transmitted data and a quantity of information bits corresponding to the to-be-transmitted data.

Step (2): The second device receives a target codeword sequence $r_{data}$={1.2, 1.5, 3, 0.5} and a first pilot signal that are from the first device. $r_{data}$={1.2, 1.5, 3, 0.5} is a codeword sequence obtained by performing modulation and channel noise processing on the first codeword sequence on a channel between the first device and the second device.

Step (3): The second device determines a V code sequence based on $r_{data}$ and the first pilot signal. The second device performs decoding on $r_{data}$ based on an SC decoding algorithm, to obtain estimation values of the first 2 bits $\mu_0$ and $\mu_1$ in a bit sequence corresponding to $r_{data}$, and then performs polar encoding on the estimation values of $\mu_0$ and $\mu_1$, to obtain the V code sequence {0, 1, 0, 0}. The V code sequence in this example may be understood as the second codeword sequence in the embodiment in FIG. 7.

Step (4): The second device demasks the V code sequence from $r_{data}$, to obtain a first intermediate codeword sequence $r_{demask}$, where the first intermediate codeword sequence may be understood as a receiving sequence corresponding to a U code sequence. Because the first codeword sequence corresponding to $r_{data}$ is a superposition of the U code sequence and the V code sequence in a binary field, a symbol in the target codeword sequence $r_{data}$ at a location corresponding to 0 in the V code sequence does not change, and a symbol in the target codeword sequence $r_{data}$ at a location corresponding to 1 in the V code sequence is flipped. Therefore, after demasking the V code sequence from $r_{data}$, the second device obtains $r_{demask}$={1.2, -1.5, 3, 0.5}.

Step (5): The second device determines the U code sequence based on $r_{demask}$. Because in $r_{demask}$, a symbol of a $2^{nd}$ bit is different from a symbol of a $4^{th}$ bit (symbols of -1.5 and 0.5 are different), and symbols of bits in a second half of $r_{demask}$ are not repetitions of symbols of bits in a first half of $r_{demask}$, the symbol of the $4^{th}$ bit with a smaller absolute value of an LLR in the $2^{nd}$ bit and the $4^{th}$ bit is flipped, to obtain a flipped first intermediate codeword sequence $r_{demask}$'={1.2, - 1.5, 3, -0.5}. The second device performs decoding on {1.2, -1.5, 3, -0.5} based on the SC decoding algorithm, to obtain estimation values of the last 2 bits $\mu_2$ and $\mu_3$ in the bit sequence corresponding to $r_{data}$, and then performs polar encoding on the estimation values of $\mu_2$ and $\mu_3$, to obtain the U code sequence {0, 1, 0, 1}. The U code sequence in this example may be understood as the third codeword sequence in the foregoing embodiment.

Step (6): The second device superposes the V code sequence {0, 1, 0, 0} and the U code sequence {0, 1, 0, 1} in the binary field, that is, {0, 1, 0, 0}+{0, 1, 0, 1}={0, 0, 0, 1}, and performs phase modulation on {0, 0, 0, 1}, to obtain a pilot sequence {1, 1, 1, -1} of a second pilot signal.

Step (7): The second device determines a first channel estimation value based on the first pilot signal and the second pilot signal, where precision of the first channel estimation value is higher than precision of a channel estimation value determined by using only the first pilot signal. The second device obtains, based on the first channel estimation value and $r_{data}$, an LLR sequence input to a decoder. The decoder performs polar decoding on the LLR sequence based on the SC decoding algorithm, to obtain the bit sequence.

Example 2: An example in which a quantity of bits in a bit sequence corresponding to to-be-transmitted data is N=8, a quantity of information bits in the bit sequence is K=4, and additional pilot signals are determined twice by using a polar-code-based U-UV structure is used.

Step (1): A first device determines, based on a quantity of first pilot signals, a bit rate of a polar code, and a first reliability sequence that are currently used, a second reliability sequence corresponding to the to-be-transmitted data. The first device determines, based on the to-be-transmitted data and the second reliability sequence, a bit sequence corresponding to the to-be-transmitted data. Then the first device performs polar encoding on the bit sequence, to obtain a first codeword sequence. The first device sends the first codeword sequence and the first pilot signal to a second device. The first reliability sequence is a reliability sequence predefined in an NR standard, and the first reliability sequence is related to a quantity of bits corresponding to the to-be-transmitted data and a quantity of information bits corresponding to the to-be-transmitted data.

FIG. 11 is a diagram of an encoding matrix used in a process of performing polar encoding on a bit sequence. $\mu_7$, $\mu_6$, $\mu_5$, and $\mu_3$ are information bits, and $\mu_4$, $\mu_2$, $\mu_1$, and $\mu_0$ are fixed bits. In FIG. 11, a submatrix $G_V$ of four rows and eight columns corresponding to the first four rows is an encoding matrix corresponding to a V code. In FIG. 10, a submatrix $G_U$ of four rows and eight columns corresponding to the last four rows is an encoding matrix corresponding to a U code.

Step (2): The second device receives a target codeword sequence $r_{data}$={1.2, 1.5, 3, 0.5, 2.1, 3.4, 1.2, 0.6} and a first pilot signal that are from the first device. $r_{data}$={1.2, 1.5, 3, 0.5, 2.1, 3.4, 1.2, 0.6} is a codeword sequence obtained by performing modulation on the first codeword sequence by the first device and then performing channel noise processing on a modulated first codeword sequence on a channel between the first device and the second device.

Step (3): The second device determines a V code sequence based on $r_{data}$ and the first pilot signal. The second device performs decoding on $r_{data}$ based on an SC decoding algorithm, to obtain estimation values of the first 4 bits $\mu_0$, $\mu_1$, $\mu_2$, and $\mu_3$ in a bit sequence corresponding to $r_{data}$, and then performs polar encoding on the estimation values of $\mu_0$, $\mu_1$, $\mu_2$, and $\mu_3$, to obtain the V code sequence {0, 1, 0, 0, 0, 0, 0, 0}. The V code sequence in this example may be understood as the second codeword sequence in the embodiment in FIG. 7.

Step (4): The second device demasks the V code sequence from $r_{data}$, to obtain a first intermediate codeword sequence $r_{demask}$, where the first intermediate codeword sequence may be understood as a receiving sequence corresponding to a U code sequence. Because the first codeword sequence corresponding to $r_{data}$ is a superposition of the U code sequence and the V code sequence in a binary field, a symbol in the target codeword sequence $r_{data}$ at a location corresponding to 0 in the V code sequence does not change, and a symbol in the target codeword sequence $r_{data}$ at a location corresponding to 1 in the V code sequence is flipped. Therefore, after demasking the V code sequence from $r_{data}$, the second device obtains $r_{demask}$={1.2, -1.5, 3, 0.5, 2.1, 3.4, 1.2, 0.6}.

Step (5): The second device determines the U code sequence based on $r_{demask}$. Because in $r_{demask}$, a symbol of a 2nd bit is different from a symbol of a 6th bit (symbols of -1.5 and 3.4 are different), and symbols of bits in a second half of $r_{demask}$ are not repetitions of symbols of bits in a first half of $r_{demask}$, the symbol of the 2nd bit with a smaller absolute value of an LLR in the 2nd bit and the 6th bit is flipped, to obtain a flipped first intermediate codeword sequence $r_{demask}$'={1.2, 1.5, 3, 0.5, 2.1, 3.4, 1.2, 0.6}. The second device performs decoding on $r_{demask}$' based on the SC decoding algorithm, to obtain estimation values of the last 4 bits $\mu_4$, $\mu_5$, $\mu_6$, and $\mu_7$ in the bit sequence corresponding to $r_{data}$, and then performs polar encoding on the estimation values of $\mu_4$, $\mu_5$, $\mu_6$, and $\mu_7$, to obtain the U code sequence {0, 0, 0, 0, 0, 0, 0, 0}. The U code sequence in this example may be understood as the third codeword sequence in the embodiment in FIG. 7.

Step (6): The second device superposes the V code sequence {0, 1, 0, 0} and the U code sequence {0, 1, 0, 1} in the binary field, to obtain a codeword sequence $a_0$ to $a_7$={0, 1, 0, 0, 0, 0, 0, 0}, and performs phase modulation on the codeword sequences $a_0$ to $a_7$, to obtain a pilot sequence {1, -1, 1, 1, 1, 1, 1, 1} of a second pilot signal.

Step (7): The second device determines a first channel estimation value based on the first pilot signal and the second pilot signal, where precision of the first channel estimation value is higher than precision of a channel estimation value determined by using only the first pilot signal. The second device obtains, based on the first channel estimation value and $r_{data}$, an LLR sequence input to a decoder. The decoder performs polar decoding on the LLR sequence based on the SC decoding algorithm, to obtain the estimation values of the first 2 bits $\mu_4$ and $\mu_5$ in the last 4 bits in the bit sequence. Polar encoding is performed on the estimation values of the first 2 bits $\mu_4$ and $\mu_5$ in the last 4 bits in the bit sequence, to obtain a fourth codeword sequence {0, 1, 0, 0, 0, 1, 0, 0}. This step is performed to perform additional channel estimation on the U code again by using the U-UV structure. The fourth codeword sequence may be understood as a V code sequence corresponding to $\mu_4$, $\mu_5$, $\mu_6$, and $\mu_7$.

Step (8): The second device demasks the fourth codeword sequence from the first intermediate codeword sequence, to obtain a second intermediate codeword sequence $r_{demask}$"={1.2, -1.5, 3, 0.5, 2.1, -3.4, 1.2, 0.6}, where the second intermediate codeword sequence may be understood as a receiving sequence corresponding to $\mu_6$ and $\mu_7$.

Step (9): The second device determines a fifth codeword sequence based on $r_{demask}$". It can be learned from a matrix structure of an encoding matrix corresponding to the U code that, in $r_{demask}$", a symbol of a 1st bit should be the same as a symbol of a 3rd bit, a symbol of a 2nd bit should be the same as a symbol of a 4th bit, a symbol of a 5th bit should be the same as a symbol of a 7th bit, and a symbol of a 6th bit should be the same as a symbol of an 8th bit. However, in $r_{demask}$", the symbol of the 2nd bit is different from the symbol of the 4th bit, and the symbol of the 6th bit is different from the symbol of the 8th bit. Therefore, the symbols of the 4th bit and the 8th bit in $r_{demask}$" are flipped, to obtain updated $r_{demask}$"={1.2, -1.5, 3,

-0.5, 2.1, -3.4, 1.2, -0.6}. The second device performs decoding on {1.2, -1.5, 3, -0.5, 2.1, -3.4, 1.2, -0.6} based on the SC decoding algorithm, to obtain the estimation values of $\mu_6$ and $\mu_7$ in the bit sequence corresponding to $r_{data}$, and then performs polar encoding on the estimation values of $\mu_6$ and $\mu_7$, to obtain the fifth codeword sequence {0, 1, 0, 1, 0, 1, 0, 1}. The fifth codeword sequence may be understood as a U code sequence corresponding to $\mu_4$, $\mu_5$, $\mu_6$, and $\mu_7$.

Step (10): The second device superposes the fourth codeword sequence {0, 1, 0, 0, 0, 1, 0, 0} and the fifth codeword sequence {0, 1, 0, 1, 0, 1, 0, 1} in the binary field, to obtain a codeword sequence $b_0$ to $b_7$={0, 0, 0, 1, 0, 0, 0, 1}. The codeword sequence $a_0$ to $a_7$={0, 1, 0, 0, 0, 0, 0, 0} determined in step (6) and the codeword sequence $b_0$ to $b_7$={0, 0, 0, 1, 0, 0, 0, 1} are superposed in the binary field, to obtain a codeword sequence $c_0$ to $c_7$={0, 1, 0, 1, 0, 0, 0, 1}. Phase modulation is performed on the codeword sequence $c_0$ to $c_7$={0, 1, 0, 1, 0, 0, 0, 1}, to obtain a pilot sequence {1, -1, 1, -1, 1, 1, 1, -1} of a third pilot signal.

Step (11): The second device determines a second channel estimation value based on the first pilot signal, the second pilot signal, and the third pilot signal, where precision of the second channel estimation value is higher than the precision of the first channel estimation value. The second device obtains, based on the second channel estimation value and $r_{data}$, an LLR sequence input to a decoder. The decoder performs polar decoding on the LLR sequence based on the SC decoding algorithm, to obtain the bit sequence.

It should be understood that in this embodiment of this application, M may alternatively be equal to a rounded-down value of $N/2$, and L may alternatively be equal to a rounded-down value of $(N-M)/2$. A rounding manner is not limited in embodiments of this application.

The foregoing describes the data transmission method provided in embodiments of this application. The following describes an execution body for performing the foregoing data transmission method.

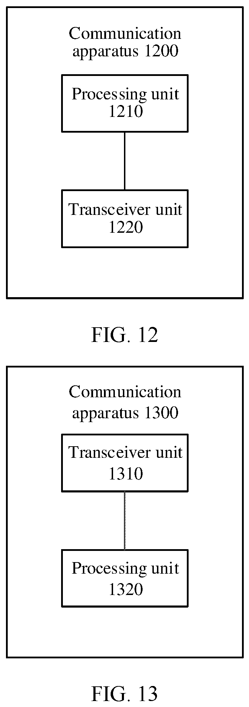

FIG. 12 is a block diagram of a communication apparatus 1200 according to an embodiment of this application. The apparatus may be used in or deployed in a first device in the method embodiments of this application.

The communication apparatus 1200 includes: a processing unit 1210, configured to determine, based on a quantity of first pilot signals, a bit rate of a polar code, and a first reliability sequence that correspond to to-be-transmitted data, a second reliability sequence corresponding to the to-be-transmitted data; and a transceiver unit 1220, configured to send a first codeword sequence and the first pilot signal to a second device, where the first codeword sequence is obtained by performing polar encoding on a bit sequence by the processing unit, and the bit sequence is determined by the processing unit based on the to-be-transmitted data and the second reliability sequence.

Optionally, the processing unit 1210 is specifically configured to: determine, based on the quantity of pilot signals, the bit rate of the polar code, and the first reliability sequence, a bit rate allocation function corresponding to the bit rate of the polar code; and determine the second reliability sequence based on the bit rate allocation function corresponding to the bit rate of the polar code.

FIG. 13 is a block diagram of a communication apparatus 1300 according to an embodiment of this application. The apparatus may be used in or deployed in a second device in the method embodiments of this application.

The communication apparatus 1300 includes: a transceiver unit 1310, configured to receive a target codeword sequence and a first pilot signal that are from a first device, where the target codeword sequence is a codeword sequence obtained by performing modulation and channel noise processing on a first codeword sequence, and the first codeword sequence is obtained by performing polar encoding on a bit sequence by the first device; and

a processing unit 1320, configured to determine a second codeword sequence based on the target codeword sequence and the first pilot signal, where the second codeword sequence is a polar code sequence corresponding to estimation values of the first M bits in the bit sequence, the bit sequence occupies N bits, M is equal to a rounded-up value of $N/2$, and N and M are positive integers, where the processing unit 1320 is further configured to determine a third codeword sequence based on the target codeword sequence and the second codeword sequence, where the third codeword sequence is a polar code sequence corresponding to estimation values of the last N - M bits in the bit sequence; and the processing unit 1320 is further configured to determine the bit sequence based on a first channel estimation value and the target codeword sequence, where the first channel estimation value is determined based on the first pilot signal and a second pilot signal, and the second pilot signal is determined based on the second codeword sequence and the third codeword sequence.

Optionally, the processing unit 1320 is specifically configured to: demask the second codeword sequence from the target codeword sequence, to obtain a first intermediate codeword sequence; and determine the third codeword sequence based on the first intermediate codeword sequence.

Optionally, the processing unit 1320 is specifically configured to:

determine a fourth codeword sequence based on the first channel estimation value and the target codeword sequence, where the fourth codeword sequence is a polar code sequence corresponding to estimation values of the first $L$ bits in the last $N - M$ bits in the bit sequence, $L$ is equal to a rounded-up value of $(N - M) / 2$, and $L$ is a positive integer;

determine a fifth codeword sequence based on the first intermediate codeword sequence and the fourth codeword sequence, where the fifth codeword sequence is a polar code sequence corresponding to estimation values of the last $N - M - L$ bits in the last $N-M$ bits in the bit sequence; and

determine the bit sequence based on a second channel estimation value and the target codeword sequence, where the second channel estimation value is determined based on the first pilot signal, the second pilot signal, and a third pilot signal, and the third pilot signal is determined based on the fourth codeword sequence and the fifth codeword sequence.

Optionally, the processing unit 1320 is specifically configured to:

demask the fourth codeword sequence from the first intermediate codeword sequence, to obtain a second intermediate codeword sequence; and

determine the fifth codeword sequence based on the second intermediate codeword sequence.

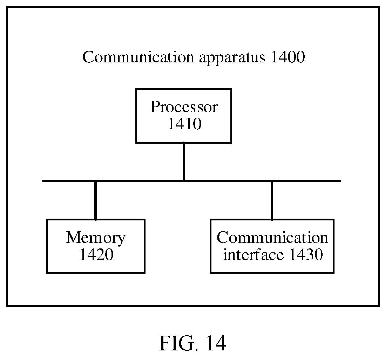

For example, FIG. 14 is a block diagram of another communication apparatus 1400 according to an embodiment of this application. The communication apparatus 1400 includes a processor 1410, a memory 1420, and a communication interface 1430.

The memory 1420 is configured to store a computer program.

The processor 1410 is coupled to the memory 1420 through the communication interface 1430. The processor 1410 is configured to: invoke and run the computer program in the memory 1420, to implement the method in embodiments of this application. The communication apparatus may be used in the first device or the second device in embodiments of this application. Optionally, the processor 1410 and the memory 1420 are integrated together.

The processor 1410 may be an integrated circuit chip and has a signal processing capability. In an implementation process, steps in the foregoing method embodiments may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication device. The communication device includes an input/output interface and a logic circuit. The input/output interface is configured to obtain input information and/or output information. The logic circuit is configured to: perform the method in any one of the method embodiments, and perform processing based on the input information and/or generate output information.

An embodiment of this application provides a communication system, including the first device and the second device in the data transmission method in embodiments of this application.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

An embodiment of this application further provides a computer program product. The computer program product includes computer program code. When the computer program code is run on a computer, the method in the foregoing method embodiments is performed.

An embodiment of this application further provides a chip, including a processor. The processor is connected to a memory. The memory is configured to store a computer program. The processor is configured to execute the computer program stored in the memory, so that the chip performs the method in the foregoing method embodiments.

It should be understood that in embodiments of this application, numbers "first", "second", and the like are merely for distinguishing between different objects, for example, to distinguish between different devices or different codeword sequences, and do not constitute a limitation on the scope of embodiments of this application. Embodiments of this application are not limited thereto.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that this implementation goes beyond the scope of this application.

A person skilled in the art may clearly learn that, for the purpose of convenient and brief description, for a specific working process of the foregoing system, apparatus, and unit, refer to a corresponding process in the foregoing method embodiments. Details are not described herein again.

In some embodiments provided in this application, it should be understood that the disclosed system, apparatus and method may be implemented in another manner. For example, the described apparatus embodiment is merely an example. For example, the unit division is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A data transmission method, comprising:

    determining, by a first device based on a quantity of first pilot signals, a bit rate of a polar code, and a first reliability sequence that correspond to to-be-transmitted data, a second reliability sequence corresponding to the to-be-transmitted data; and
    sending, by the first device, a first codeword sequence and the first pilot signal to a second device, wherein the first codeword sequence is obtained by performing polar encoding on a bit sequence by the first device, and the bit sequence is determined by the first device based on the to-be-transmitted data and the second reliability sequence.

2.  The method according to claim 1, wherein the determining, by a first device based on a quantity of first pilot signals, a bit rate of a polar code, and a first reliability sequence that correspond to to-be-transmitted data, a second reliability sequence corresponding to the to-be-transmitted data comprises:

    determining, by the first device based on the quantity of first pilot signals, the bit rate of the polar code, and the first reliability sequence, a bit rate allocation function corresponding to the bit rate of the polar code; and
    determining, by the first device, the second reliability sequence based on the bit rate allocation function corresponding to the bit rate of the polar code.

3. A data transmission method, comprising:

receiving, by a second device, a target codeword sequence and a first pilot signal that are from a first device, wherein the target codeword sequence is a codeword sequence obtained by performing modulation and channel noise processing on a first codeword sequence, and the first codeword sequence is obtained by performing polar encoding on a bit sequence by the first device;

determining, by the second device, a second codeword sequence based on the target codeword sequence and the first pilot signal, wherein the second codeword sequence is a polar code sequence corresponding to estimation values of the first $M$ bits in the bit sequence, the bit sequence occupies $N$ bits, $M$ is equal to a rounded-up value of $N / 2$, and $N$ and $M$ are positive integers;

determining, by the second device, a third codeword sequence based on the target codeword sequence and the second codeword sequence, wherein the third codeword sequence is a polar code sequence corresponding to estimation values of the last $N - M$ bits in the bit sequence; and

determining, by the second device, the bit sequence based on a first channel estimation value and the target codeword sequence, wherein the first channel estimation value is determined based on the first pilot signal and a second pilot signal, and the second pilot signal is determined based on the second codeword sequence and the third codeword sequence.

4. The method according to claim 3, wherein the determining, by the second device, a third codeword sequence based on the target codeword sequence and the second codeword sequence comprises:

demasking, by the second device, the second codeword sequence from the target codeword sequence, to obtain a first intermediate codeword sequence; and

determining, by the second device, the third codeword sequence based on the first intermediate codeword sequence.

5. The method according to claim 3 or 4, wherein the determining, by the second device, the bit sequence based on a first channel estimation value and the target codeword sequence comprises:

determining, by the second device, a fourth codeword sequence based on the first channel estimation value and the target codeword sequence, wherein the fourth codeword sequence is a polar code sequence corresponding to estimation values of the first $L$ bits in the last $N - M$ bits in the bit sequence, $L$ is equal to a rounded-up value of $(N - M) / 2$, and $L$ is a positive integer;

determining, by the second device, a fifth codeword sequence based on the first intermediate codeword sequence and the fourth codeword sequence, wherein the fifth codeword sequence is a polar code sequence corresponding to estimation values of the last $N - M - L$ bits in the last $N - M$ bits in the bit sequence; and

determining, by the second device, the bit sequence based on a second channel estimation value and the target codeword sequence, wherein the second channel estimation value is determined based on the first pilot signal, the second pilot signal, and a third pilot signal, and the third pilot signal is determined based on the fourth codeword sequence and the fifth codeword sequence.

6. The method according to claim 5, wherein the determining, by the second device, a fifth codeword sequence based on the first intermediate codeword sequence and the fourth codeword sequence comprises:

demasking, by the second device, the fourth codeword sequence from the first intermediate codeword sequence, to obtain a second intermediate codeword sequence; and

determining, by the second device, the fifth codeword sequence based on the second intermediate codeword sequence.

7. A communication apparatus, comprising:

a processing unit, configured to determine, based on a quantity of first pilot signals, a bit rate of a polar code, and a first reliability sequence that correspond to to-be-transmitted data, a second reliability sequence corresponding to the to-be-transmitted data; and

a transceiver unit, configured to send a first codeword sequence and the first pilot signal to a second device, wherein the first codeword sequence is obtained by performing polar encoding on a bit sequence by the processing unit, and the bit sequence is determined by the processing unit based on the to-be-transmitted data and the second reliability sequence.

8. The apparatus according to claim 7, wherein the processing unit is specifically configured to:

    determine, based on the quantity of pilot signals, the bit rate of the polar code, and the first reliability sequence, a bit rate allocation function corresponding to the bit rate of the polar code; and
    determine the second reliability sequence based on the bit rate allocation function corresponding to the bit rate of the polar code.

9. A communication apparatus, comprising:

    a transceiver unit, configured to receive a target codeword sequence and a first pilot signal that are from a first device, wherein the target codeword sequence is a codeword sequence obtained by performing modulation and channel noise processing on a first codeword sequence, and the first codeword sequence is obtained by performing polar encoding on a bit sequence by the first device; and
    a processing unit, configured to determine a second codeword sequence based on the target codeword sequence and the first pilot signal, wherein the second codeword sequence is a polar code sequence corresponding to estimation values of the first $M$ bits in the bit sequence, the bit sequence occupies $N$ bits, $M$ is equal to a rounded-up value of $N$ / 2, and $N$ and $M$ are positive integers, wherein
    the processing unit is further configured to determine a third codeword sequence based on the target codeword sequence and the second codeword sequence, wherein the third codeword sequence is a polar code sequence corresponding to estimation values of the last $N$ - $M$ bits in the bit sequence; and
    the processing unit is further configured to determine the bit sequence based on a first channel estimation value and the target codeword sequence, wherein the first channel estimation value is determined based on the first pilot signal and a second pilot signal, and the second pilot signal is determined based on the second codeword sequence and the third codeword sequence.

10. The apparatus according to claim 9, wherein the processing unit is specifically configured to:

    demask the second codeword sequence from the target codeword sequence, to obtain a first intermediate codeword sequence; and
    determine the third codeword sequence based on the first intermediate codeword sequence.

11. The apparatus according to claim 9 or 10, wherein the processing unit is specifically configured to:

    determine a fourth codeword sequence based on the first channel estimation value and the target codeword sequence, wherein the fourth codeword sequence is a polar code sequence corresponding to estimation values of the first $L$ bits in the last $N$ - $M$ bits in the bit sequence, $L$ is equal to a rounded-up value of ($N$ - $M$) / 2, and $L$ is a positive integer;
    determine a fifth codeword sequence based on the first intermediate codeword sequence and the fourth codeword sequence, wherein the fifth codeword sequence is a polar code sequence corresponding to estimation values of the last $N$ - $M$ - $L$ bits in the last $N$ - $M$ bits in the bit sequence; and
    determine the bit sequence based on a second channel estimation value and the target codeword sequence, wherein the second channel estimation value is determined based on the first pilot signal, the second pilot signal, and a third pilot signal, and the third pilot signal is determined based on the fourth codeword sequence and the fifth codeword sequence.

12. The apparatus according to claim 11, wherein the processing unit is specifically configured to:

    demask the fourth codeword sequence from the first intermediate codeword sequence, to obtain a second intermediate codeword sequence; and
    determine the fifth codeword sequence based on the second intermediate codeword sequence.

13. A communication apparatus, comprising a processor and a memory, wherein the memory is configured to store a computer program, and the processor is configured to execute the computer program stored in the memory, to enable the communication apparatus to perform the method according to any one of claims 1 to 6.

14. A computer-readable storage medium, wherein

    the computer-readable medium stores a computer program; and

when the computer program is run on a computer or a processor, the computer or the processor is enabled to perform the method according to any one of claims 1 to 6.

15. A computer program product, comprising a computer program, wherein when the computer program is executed, the method according to any one of claims 1 to 6 is implemented.

FIG. 1

N=8 and K=4

FIG. 2

FIG. 3

FIG. 4

FIG. 5

FIG. 6

700

| First device | | Second device |

710: Determine, based on a quantity of first pilot signals, a bit rate of a polar code, and a first reliability sequence, a second reliability sequence corresponding to to-be-transmitted data

720: First codeword sequence and first pilot signal, where the first codeword sequence is obtained by performing polar encoding on a bit sequence, and the bit sequence is determined based on the to-be-transmitted data and the second reliability sequence

730: Receive a target codeword sequence and the first pilot signal, where the target codeword sequence is a codeword sequence obtained by performing modulation and channel noise processing on the first codeword sequence

740: Determine a second codeword sequence based on the target codeword sequence and the first pilot signal

750: Determine a third codeword sequence based on the target codeword sequence and the second codeword sequence

760: Determine the bit sequence based on a first channel estimation value and the target codeword sequence, where the first channel estimation value is determined based on the first pilot signal and a second pilot signal, and the second pilot signal is determined based on the second codeword sequence and the third codeword sequence

FIG. 7

V code: $K_1=8$
U code: $K_2=24$

U code: $K_2' = \left\lceil K_2 \times \dfrac{C_2}{C_1} \right\rceil = \lceil 24 \times 1.1 \rceil = 27$

V code: $K_1' = K - K_2' = 5$

FIG. 8

V code: $K_1=8$
U code: $K_2=24$

U code: $K'_2 = \left\lceil K_2 \times \dfrac{C_2}{C_1} \right\rceil = \lceil 24 \times 1.1 \rceil = 27$

V code: $K'_1 = K - K'_2 = 5$

FIG. 9

N=256 and K=64

Additional pilot signal determined for a 1$^{st}$ time

V code

Additional pilot signal determined for a 2$^{nd}$ time

V code

Additional pilot signal determined for a 3$^{rd}$ time

V code

$\vdots$

Additional pilot signal determined for a maximum of $\log_2 N$ times

FIG. 10

$\mu_0$
$\mu_1$
V code $\mu_2$
$\mu_3$

| 1 | 0 | 0 | 0 | 0 | 0 | 0 | 0 |
| 1 | 1 | 0 | 0 | 0 | 0 | 0 | 0 |
| 1 | 0 | 1 | 0 | 0 | 0 | 0 | 0 |
| 1 | 1 | 1 | 1 | 0 | 0 | 0 | 0 |

$\mu_4$
$\mu_5$
U code $\mu_6$
$\mu_7$

| 1 | 0 | 0 | 0 | 1 | 0 | 0 | 0 |
| 1 | 1 | 0 | 0 | 1 | 1 | 0 | 0 |
| 1 | 0 | 1 | 0 | 1 | 0 | 1 | 0 |
| 1 | 1 | 1 | 1 | 1 | 1 | 1 | 1 |

FIG. 11

Communication
apparatus 1200

Processing unit
1210

Transceiver unit
1220

FIG. 12

Communication
apparatus 1300

Transceiver unit
1310

Processing unit
1320

FIG. 13

Communication apparatus 1400

Processor
1410

Memory
1420

Communication
interface 1430

FIG. 14

## INTERNATIONAL SEARCH REPORT

| International application No. |
| --- |
| **PCT/CN2022/132307** |

### A. CLASSIFICATION OF SUBJECT MATTER

H04L1/18(2023.01)i; H04L27/00(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, VEN, ENTXT, ENTXTC, 3GPP, CJFD, CNKI, IEEE: 极化码, 极化编码, 导频, 前导, 训练, 参考, 符号, 序列, 比特, 码率, 码字, 可靠性, 可靠度, polar code, pilot, train+, reference, symbol, sequence, bit, code rate, codeword, reliability

### C. DOCUMENTS CONSIDERED TO BE RELEVANT

| Category* | Citation of document, with indication, where appropriate, of the relevant passages | Relevant to claim No. |
| --- | --- | --- |
| A | US 2021328716 A1 (LG ELECTRONICS INC.) 21 October 2021 (2021-10-21) description, paragraphs [0171]-[0340] | 1-15 |
| A | CN 114826478 A (HUAWEI TECHNOLOGIES CO., LTD.) 29 July 2022 (2022-07-29) entire document | 1-15 |
| A | CN 115336202 A (HUAWEI TECHNOLOGIES CO., LTD.) 11 November 2022 (2022-11-11) entire document | 1-15 |
| A | US 2022029638 A1 (LG ELECTRONICS INC.) 27 January 2022 (2022-01-27) entire document | 1-15 |
| A | HUAWEI et al. "System Evaluation of Coding Schemes" *3GPP TSG RAN WG1 Meeting #87 R1-1611690*, 05 November 2016 (2016-11-05), entire document | 1-15 |
| A | 吴亮等 (WU, Liang et al.). "一种箭载电力线通信信道编码方案 (A Rocket Powerline Communication Channel Coding Scheme)" *自动化与仪表 (Automation & Instrumentation)*, Vol. 33, No. (4), 30 April 2018 (2018-04-30), entire document | 1-15 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 June 2023** | **15 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2022/132307** |

**C.    DOCUMENTS CONSIDERED TO BE RELEVANT**

| Category* | Citation of document, with indication, where appropriate, of the relevant passages | Relevant to claim No. |
|---|---|---|
| A | QIN, Kangjian et al. "Polar Coded Adaptive Data Transmission in an Indoor mmWave Scenario" <br> *2018 International Conference on Microwave and Millimeter Wave Technology (ICMMT),* 06 December 2018 (2018-12-06), <br> entire document | 1-15 |

Form PCT/ISA/210 (second sheet) (July 2022)

## INTERNATIONAL SEARCH REPORT

| International application No. |
| --- |
| **PCT/CN2022/132307** |

**Box No. III     Observations where unity of invention is lacking (Continuation of item 3 of first sheet)**

This International Searching Authority found multiple inventions in this international application, as follows:

Independent claims 1, 7, 13-15 (when referring to independent claim 1) and independent claims 3, 9 and 13-15 (when referring to independent claim 3) do not have a same or corresponding special technical feature; therefore, the international application comprises two inventions.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**    ☐   The additional search fees were accompanied by the applicant's protest and, where applicable, the payment of a protest fee.

                             ☐   The additional search fees were accompanied by the applicant's protest but the applicable protest fee was not paid within the time limit specified in the invitation.

                             ☐   No protest accompanied the payment of additional search fees.

Form PCT/ISA/210 (continuation of first sheet) (July 2022)

**INTERNATIONAL SEARCH REPORT**
Information on patent family members

International application No.

**PCT/CN2022/132307**

| Patent document cited in search report | | | Publication date (day/month/year) | Patent family member(s) | | | Publication date (day/month/year) |
|---|---|---|---|---|---|---|---|
| US | 2021328716 | A1 | 21 October 2021 | WO | 2020045943 | A1 | 05 March 2020 |
| CN | 114826478 | A | 29 July 2022 | WO | 2022161201 | A1 | 04 August 2022 |
| CN | 115336202 | A | 11 November 2022 | WO | 2021196054 | A1 | 07 October 2021 |
| US | 2022029638 | A1 | 27 January 2022 | WO | 2020116958 | A1 | 11 June 2020 |

Form PCT/ISA/210 (patent family annex) (July 2022)